# EUROPÄISCHE PATENTSCHRIFT

(11) **EP 2 734 395 B1**
(45) Veröffentlichungstag und Bekanntmachung des Hinweises auf die Patenterteilung: **06.09.2017**
(21) Anmeldenummer: 12751432.1
(22) Anmeldetag: 14.07.2012
(51) Int. Cl.: B60K 15/04, B60K 15/05

(54) **TANKKLAPPENVERRIEGELUNG MIT REDUZIERTER ANZAHL VON BAUTEILEN**
FUEL TANK CAP LOCK WITH A REDUCED NUMBER OF COMPONENTS
DISPOSITIF DE VERROUILLAGE DE BOUCHON DE RÉSERVOIR À NOMBRE RÉDUIT D'ÉLÉMENTS

(30) Priorität: 22.07.2011 DE 102011108154; 15.08.2011 DE 102011114659; 18.10.2011 DE 102011116067
(43) Veröffentlichungstag der Anmeldung: 28.05.2014
(73) Patentinhaber: Kiekert Aktiengesellschaft, 42579 Heiligenhaus (DE)
(72) Erfinder: BASAVARAJAPPA, Madhu, S., 40211 Düsseldorf (DE); WAHMANN, Hendrik, 46029 Düsseldorf (DE)
(74) Vertreter: Gille Hrabal
(86) Internationale Anmeldenummer: PCT/DE2012/000718
(87) Internationale Veröffentlichungsnummer: WO 2013/013654

(56) Entgegenhaltungen:
- EP-A1- 1 018 588
- WO-A1-2008/059543
- DE-A1- 19 747 707
- GB-A- 2 149 447
- US-A1- 2001 050 486

## Beschreibung

Die Erfindung betrifft eine Verriegelung für eine Tank- oder Ladeklappe in einem Fahrzeug, mit einem durch Öffnen und Schließen der Tank- oder Ladeklappe zwischen einer Öffnungs- und einer Schließposition verstellbaren Riegelbolzen.

Verriegelungen für Tankklappen sind zum Beispiel aus der DE 10 2011 076 810 bekannt. Die Tankklappe wird nach Beendigung des Tankvorgangs von Hand geschlossen, dabei wird eine Kraft auf einen Riegelbolzen ausgeübt, sodass dieser sich aus seiner ausgefahrenen Öffnungs- in seine eingefahrene Schließposition verstellt. Bei Betätigung der Tankklappe wird der Bolzen gleichzeitig um seine Längsachse verdreht und dadurch an seinem der Tankklappe zugewandten Ende in der Tankklappe fixiert, so dass der Verschluss hergestellt ist. Die in diesem Zusammenhang bisher eingesetzte Mimik baut sehr kompliziert und umfasst eine Vielzahl von Bauteilen. In Konsequenz führt dies unter anderem auch dazu, dass vergleichsweise starke Antriebe für den in der Regel über die Zentralverriegelung gesteuerten Schließvorgang notwendig sind. Die Vielzahl von kompliziert bauenden Einzelteilen führt außerdem zu einem hohen Montageaufwand und zu einer erheblichen Störungsanfälligkeit. Unter Ladeklappen sind insbesondere Abdeckungen für Ladebuchsen in einem Elektrofahrzeug zum Nachladen von Batterien zu verstehen. Eine Verriegelung für Tankklappen mit den Merkmalen des Oberbegriffs des Anspruchs 1 ist aus der EP 1 018 588 A1 bekannt.

Es stellt sich der vorliegenden Erfindung die Aufgabe, eine Verriegelung für eine Tank- oder Ladeklappe in einem Fahrzeug mit einer minimalen Anzahl von Bauteilen zu schaffen, um die Montage zu vereinfachen, die Störungsanfälligkeit zu verringern und um kleinere Antriebe zur Handhabe dieser Verriegelung einsetzen zu können.

Diese Aufgabe wird nach einer ersten Ausführungsform der Erfindung dadurch gelöst, dass der Riegelbolzen in dem Gehäuse der Verriegelung in Richtung seiner Längsachse und um seine Längsachse gegen die Kraft einer Druckfeder zwangsgeführt ist.

Durch diese Ausbildung und Lagerung des Riegelbolzens ist eine besonders kompakte Verriegelung für eine Tank- oder Ladeklappe in einem Fahrzeug verwirklicht, die mit einer minimalen Zahl von Bauteilen auskommt. Hierzu ist der zwischen einer ausgefahrenen Öffnungs- und einer eingefahrenen Schließposition verstellbare Riegelbolzen in dem Gehäuse der Verriegelung bei der Verstellung von der Öffnungs- in die Schließposition und wieder zurück zwangsgeführt. Eine Druckfeder, die in Längsachsenrichtung des Riegelbolzens wirkt, führt in Zusammenspiel mit dieser Zwangsführung zu einer direkten und effektiven Verstellung der Verriegelung zwischen den unterschiedlichen Positionen.

Die Zwangsführung befindet sich zwischen Riegelbolzen und Gehäuse und zwar in Form einer Kulisse, die dem Riegelbolzen und/oder dem Gehäuse zugeordnet ist. Zweckmäßigerweise ist vorgesehen, dass in Bezug auf den Riegelbolzen als Teil der Zwangsführung auf dessen Mantelfläche eine in sich geschlossene, rundum laufende Kulisse dient.

Als gehäuseseitiges Gegenstück zu dieser Kulisse dient in Bezug auf das Gehäuse als Zwangsführung ein in der Kulisse auf der Mantelfläche des Riegelbolzens geführter Stift. Dieser ist in der in sich geschlossen, bahnartig ausgebildeten Kulisse stets zwangsgeführt, so dass er die Kulisse bei der Verstellung des Riegelbolzens stets von neuem durchläuft.

Bei der Verstellung des Riegelbolzens zwischen Öffnungs- und Schließposition verschiebt sich dieser auf der vorgegebenen, rundum verlaufenden Kulisse, wozu diese Kulisse zwei einander gegenüberliegende, im Wesentlichen diagonal verlaufende Abschnitte aufweist. Diese diagonal verlaufenden Abschnitte sind vergleichsweise lang ausgebildet, weil sie den Weg abbilden, den letztlich der Riegelbolzen zwischen der Öffnungs- und der Schließposition in Zusammenspiel mit der in Längsachsenrichtung orientierten Druckfeder beschreibt.

Die erfindungsgemäße Verriegelung kommt mit einem Minimum an Bauteilen aus, wenn die Verstellung des Riegelbolzens zwischen seinen beiden Positionen allein gegen die Kraft einer in Längsachsenrichtung des Riegelbolzens wirkende Druckfeder bewerkstelligt werden kann. Die Drehung des Riegelbolzens wird durch die Kontur der Hysterese/Kulisse in Zusammenspiel mit dem gehäuseseitigen Stift vorgegeben, indem die Kulisse in ihren Eckpunkten abgeschrägt ausgebildet ist. Diese Schrägen übernehmen also quasi die Funktion der eingesparten Torsionsfeder. Beim Bewegen des Riegelbolzens durch manuelle Betätigung stößt der Stift stets auf eine Kontur oder Schräge in der Kulisse, welche dann die Drehbewegung des Riegelbolzens auslöst.

Ein ungewolltes Öffnen der Tank- oder Ladeklappe wird sicher vermieden, wenn zwischen den beiden diagonal verlaufenden Abschnitten ein zur Sicherung einer Halteposition des Riegelbolzens in dessen geschlossenem Zustand dienender Kulissenabschnitt vorgesehen ist. Dieser erweist sich insbesondere bei zu fester oder zu langer Betätigung der Klappe als vorteilhaft, weil die hier wannenartig ausgebildete Kulisse eine Art Zwischenstellung des darin geführten Stiftes ermöglicht. Dieser verhindert, dass sich der Riegelbolzen aus der eingefahrenen, seiner Schließstellung entsprechenden Position ungewollt unter gleichzeitiger Öffnung der Tank- oder Ladeklappe verstellt.

Da sich der Stift bei Riegelbolzen in Schließposition am oberen Ende der Kulisse befindet, ist es notwendig, dass der Kulissenabschnitt am oberen Ende der Kulisse vorgesehen ist. Der Abschnitt erstreckt sich also an dem oberen Übergang zwischen den beiden diagonal verlaufenden Kulissenabschnitten.

Eine besonders bevorzugte Ausführungsform der Erfindung sieht vor, dass der Kulissenabschnitt im Wesentlichen V-förmig ausgebildet ist. Darunter wird verstanden, dass der zur Sicherung dienende Kulissenabschnitt zwei diagonal in V-Form angeordnete Flanken aufweist, die an ihren unteren Enden noch einen quer verlaufenden Übergang aufweisen können, in dem sich der Stift in der Schließposition des Riegelbolzens befindet.

Anders formuliert, der Kulissenabschnitt soll zwei versetzt zueinander angeordnete diagonale Abschnitte und einen diese verbindenden horizontalen Abschnitt aufweisen, um diese zusätzliche Sicherungsstellung in der Kulisse zu realisieren.

Ein ergänzender Vorschlag sieht vor, dass die Tank- oder Ladeklappe korrespondierend zu dem Kulissenabschnitt ausgebildet ist. Hierunter wird zum Beispiel verstanden, dass sich eine Dichtung, vorzugsweise eine Gummi- oder Kunststoffdichtung an der Tankklappe befindet, welche den Riegelbolzen in der gesicherten Position in dem Kulissenabschnitt hält.

Die erfindungsgemäße Aufgabe wird außerdem dadurch gelöst, dass zum Verriegeln der Tank- oder Ladeklappe eine mit einem Antrieb versehene Sperrklinke dient, die bei verriegelter Tank- oder Ladeklappe den Riegelbolzen blockiert.

Die Sperrklinke kann bei verriegelter Tankklappe den Riegelbolzen blockieren, so dass sich dieser nicht ungewollt verstellen kann. Auch dieser Mechanismus baut vergleichsweise einfach und damit effektiv, weil über den vorteilhafterweise besonders klein bauenden Antrieb eben nur diese Sperrklinke aus einer neutralen in eine Position geschaltet werden muss, bei der sie ein Verstellen des Riegelbolzens verhindert.

Ergänzend hierzu ist vorgesehen, dass die Sperrklinke durch eine Feder beaufschlagt ist, welche auf die Sperrklinke eine Kraft in Richtung Riegelbolzen ausübt. Die Feder wirkt derart, dass die Sperrklinke gegen den Riegelbolzen gedrückt wird. Einerseits kann die Feder die Bewegung des eingefahrenen Riegelbolzens blockieren, andererseits kann die Sperrklinke mittels der Feder auch lediglich gegen den sich in einer anderen Stellung befindlichen Riegelbolzen drücken, so dass die Sperrklinke gegen den Riegelbolzen anliegt. Insbesondere in diesem Fall ergibt sich ein Vorteil der Erfindung, nämlich der, dass ein Verriegeln der Tankklappe bei noch geöffneter Tankklappe erfolgen kann. Wird die Verriegelung bei noch geöffneter Tankklappe aktiviert, so verfährt ein Antrieb die Sperrklinke in eine Position, in der die Sperrklinke eine Bewegung des Riegelbolzens nicht blockiert, sondern gegen eine Fläche des Riegelbolzens anliegt. Die Verriegelung ist in diesem Zustand aktiv, die Tankklappe aber geöffnet. Erst nach einem Schließen der Tankklappe verfährt der Riegelbolzen in eine Position, in der die Sperrklinke eine Bewegung des Riegelbolzens blockiert.

Eine Ausführungsform der Erfindung sieht vor, dass die Sperrklinke einen korrespondierend zu dem Riegelbolzen ausgebildeten Schwenkarm und/oder einen korrespondierend zu der Feder ausgebildeten Schwenkarm aufweist. Die vorzugsweise einteilig ausgebildete Sperrklinke weist damit zumindest einen ersten Schwenkarm auf, der die Bewegbarkeit des Riegelbolzens in einer Sperrstellung blockiert, was zum Beispiel über die Zentralverriegelung gesteuert wird. Außerdem verfügt die Sperrklinke über mindestens einen zweiten Schwenkarm, welcher der Feder zugeordnet ist, die somit eine Kraft auf die Sperrklinke in Richtung Riegelbolzen ausübt. Je nach Anlage des zweiten Schwenkarms auf der Feder schwenkt der erste Schwenkarm gegen den Riegelbolzen oder von diesem weg. Die Stellung der Sperrklinke wird dabei über einen an diese angreifenden Motor bestimmt. Die Sperrklinke kann in vorteilhafter Weise auch betätigt werden, wenn diese noch nicht vor einer korrespondierend zu der Sperrklinke ausgebildeten Öffnung in dem Riegel liegt, ihre Blockierstellung also noch gar nicht einnehmen kann. Vielmehr wird die Sperrklinke von der Feder gegen die äußere Kontur des Riegels gepresst, solange die Tankklappe geöffnet ist und der Riegelbolzen sich in seiner ausgefahrenen Position befindet. Wird nun die Tankklappe geschlossen beziehungsweise der Riegelbolzen in seine eingefahrene Position bewegt, fällt die Sperrklinke gewissermaßen automatisch in die Öffnung des Riegelbolzens ein und blockiert diesen.

In diesem Sinne ist der Vorschlag zu verstehen, wonach der Riegelbolzen an seinem unteren Ende eine korrespondierend zu der Sperrklinke ausgebildete Öffnung aufweisen soll. Dabei handelt es sich in einer bevorzugten Variante um eine parallel zur Längsachse des Riegelbolzens verlaufende Nut, in welche die Sperrklinke einfährt beziehungsweise hineingedrückt wird, sobald der Riegelbolzen seine eingefahrene Position eingenommen hat, auf welche die Anordnung der Sperrklinke abgestimmt ist.

Ein ergänzender Vorschlag sieht vor, dass die Verriegelung mit einer Notentriegelung zum Ausheben der Sperrklinke aus ihrer den Riegelbolzen blockierenden Stellung ausgerüstet ist. Diese Notentriegelung kann manuell und/oder über einen Antrieb betätigt werden. Die Notentriegelung wirkt dabei in der Form auf die Sperrklinke, dass diese aus ihrer den Riegelbolzen blockierenden Stellung ausgehoben wird, um eine Rückkehr des Riegelbolzens in die der Öffnungsstellung der Tankklappe entsprechenden ausgefahrene Position zu ermöglichen.

Dass die Sperrklinke über einen dritten, der Notentriegelung zugeordneten Schwenkarm verfügt, ist Gegenstand einer weiteren Ausführungsform. Das heißt, über die Notentriegelung wird der dritte Schwenkarm der Sperrklinke betätigt und letztere damit aus ihrer den Riegelbolzen blockierenden Positionierung ausgehoben.

Eine weitere vorteilhafte Ausführungsform der Erfindung sieht vor, dass die Verriegelung mit einer Detektionsvorrichtung für den Öffnungszustand der Tank- oder Ladeklappe ausgerüstet ist. Über diese Detektionsvorrichtung kann festgestellt werden, ob die Tank- oder Ladeklappe geöffnet oder geschlossen ist. In Verbindung mit einer optischen und/oder akustischen Anzeige, die gegebenenfalls mit einer Alarmfunktion ausgerüstet ist und zum Beispiel in das Armaturenbrett des Fahrzeugs integriert ist, kann dem Fahrer somit signalisiert werden, ob die Klappe geöffnet oder geschlossen ist, insbesondere ob er unbeabsichtigt mit geöffneter oder nicht vollständig geschlossener Klappe losgefahren ist.

Dabei ist etwa im Rahmen einer vergleichsweise kostengünstigen Umsetzung daran gedacht, dass als Detektionsvorrichtung ein Schaltmittel dient, das die Position des Riegelbolzens erfasst. Über das etwa als Mikroschalter ausgebildete Schaltmittel kann direkt oder indirekt insbesondere realisiert werden, ob der Riegelbolzen sich in der eingefahrenen oder ausgefahrenen Position befindet. Dessen Positionswechsel gehen bekanntlich mit einer Verdrehung des Riegelbolzens in Folge der Betätigung der Tankklappe einher, sodass sich eben über eine Erfassung der Position des Riegelbolzens durch das Schaltmittel darauf schließen lässt, ob die Tankklappe geöffnet oder geschlossen ist.

Es ist zweckmäßig, wenn das Schaltmittel samt Schalter, über den dieses betätigt wird, unmittelbar benachbart zu dem Riegelbolzen angeordnet ist. Dies bedeutet, dass das Schaltmittel in Abhängigkeit von der Positionierung des Riegelbolzens betätigt wird. Dies ist in einer besonders geeigneten Ausführungsform der Erfindung der Fall, bei welcher der Schalter des Schaltmittels an der Kontur des Riegelbolzens anliegt.

Zum Umschalten weist der Riegelbolzen eine Öffnung auf, die in der geschlossenen Position des Riegelbolzens benachbart zu dem Schaltmittel positioniert ist. Das heißt, der Schalter gleitet gewissermaßen über die Kontur des Riegelbolzens. In der entscheidenden Position des Riegelbolzens, nämlich in dessen eingefahrener Stellung, sind die Öffnung in dem Riegelbolzen und der Schalter benachbart angeordnet. In diese Öffnung fährt oder gleitet der Schalter des Schaltmittels ein, sodass über die als Schaltmittel ausgebildete Detektionsvorrichtung ein entsprechendes Signal erfolgen kann, dass sich der Riegelbolzen in seiner eingefahrenen, geschlossenen Position befindet.

Um das Zusammenspiel zwischen der Öffnung in dem Riegelbolzen und dem Schalter zu vereinfachen, ist vorgesehen, dass die Öffnung eine Führungskulisse für den Schalter aufweist, das heißt, der Schalter soll seine Position in der Öffnung einnehmen und diese eben auch genauso einfach wieder verlassen können.

Eine Alternative zu solch einem Schaltmittel sieht vor, dass als Detektionsvorrichtung ein Hallsensor in Zusammenwirken mit einem Permanentmagneten dient. Über den Hallsensor wird die Bewegung des Permanentmagneten erfasst. Darauf erfolgt eine entsprechende Signalgebung, die in Zusammenhang mit der vorliegenden Erfindung Aufschluss über den Öffnungszustand der Tankklappe gibt. Dabei liegt ein Vorteil des Hallsensors im Zusammenspiel mit dem Permanentmagneten in der berührungslosen Funktionsweise zwischen Sensor und Magnet.

Dies ist insbesondere der Fall, wenn der Hallsensor oder der Permanentmagnet dem Riegelbolzen zugeordnet ist. Die Position des Riegelbolzens gibt, wie oben bereits beschrieben, Aufschluss über den Öffnungszustand der Tankklappe, sodass die Abfrage des Riegelbolzens besonders vorteilhaft ist, zumal dies in geschützter Form in dem Gehäuse der Verriegelung stattfinden kann.

Diese Steuerung kann auch auf andere Weise vorteilhaft ausgenutzt werden, wenn nämlich die Detektionsvorrichtung mit einer im Bereich der Tankklappe angeordneten Leuchteinheit korrespondiert. Weil über die Detektionsvorrichtung erfasst werden kann, ob die Tankklappe gerade geöffnet und eine Ausleuchtung des diese umgebenden Bereichs somit sinnvoll ist, kann über die Detektionsvorrichtung auch die Leuchteinheit gesteuert werden, deren Schaltung zum Beispiel über Stanzgitter in das Anzeigesystem integriert ist. Dies vereinfacht gerade bei ungünstigen Sichtverhältnissen das Tanken beziehungsweise Wiederaufladen der Batterie von Elektrofahrzeugen. Die Leuchteinheit kann ergänzend oder alternativ auch dazu dienen, zum Beispiel über den Ladezustand, speziell in Zusammenhang mit einer solchen Batterie, Auskunft zu gegeben. Dies bedeutet, dass dem Fahrer bei geöffneter Tankklappe der Ladezustand der Batterie angezeigt werden kann.

Die Erfindung zeichnet sich insbesondere dadurch aus, dass eine Verriegelung für eine Tank- oder Ladeklappe in einem Fahrzeug geschaffen ist, die sowohl was Anzahl als auch Dimensionierung der notwendigen Bauteile betrifft, mit einem Minimum auskommt. Maßgeblich hierfür ist ein zwischen einer ausgefahrenen Öffnungs- und einer eingefahrenen Schließposition verstellbarer Riegelbolzen, der über eine Kulisse gegenüber dem Gehäuse der Verriegelung zwangsgeführt ist. Hierzu dient, bezogen auf den Riegelbolzen eine in sich geschlossene, rundum laufende Kulisse und bezogen auf das Gehäuse ein in dieser Kulisse geführter Stift. In einem Zusammenspiel mit einer Druckfeder wird über die Zwangsführung der Lauf des Stiftes in der Kulisse gesteuert und die Rückkehr in die Ausgangsposition gewährleistet. Unter Ladeklappen sind insbesondere Abdeckungen für Ladebuchsen in einem Elektrofahrzeug zum Nachladen von Batterien zu verstehen, die alternativ zu Tankdeckeln bei Elektrofahrzeugen zum Einsatz kommen. Die erfindungsgemäße Verriegelung kann auch zum Verriegeln der Verbindungen zwischen Ladestecker und Ladesteckdose beim Ladevorgang eines Elektrofahrzeugs verwendet werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: den Blick in das Gehäuse der Verriegelung mit dem Riegelbolzen im geöffneten Zustand,
- Figur 2: die Darstellung gemäß Figur 1 mit dem Riegelbolzen im geschlossenen Zustand,
- Figur 3: das Riegelwerk in geschlossenem Zustand mit Riegelbolzen in Schließstellung,
- Figur 4: das Riegelwerk in unverschlossenem Zustand mit Riegelbolzen in Schließstellung,
- Figur 5: das Riegelwerk im geschlossenen Zustand mit Riegelbolzen in Schließstellung,
- Figur 6: das Riegelwerk in unverschlossenem Zustand mit Riegelbolzen in Öffnungsstellung,
- Figur 7: einen Riegelbolzen mit Kulisse,
- Figur 8: einen Riegelbolzen mit einer Öffnung,
- Figur 9: ein Schema für die Verstellung des Riegelbolzens,
- Figur 10: das Gehäuse der Verriegelung mit einem Mikroschalter bei geschlossener Tank- oder Ladeklappe,
- Figur 11: das Gehäuse der Verriegelung mit einem Mikroschalter bei geöffneter Tank- oder Ladeklappe,
- Figur 12: das Gehäuse der Verriegelung mit Hallsensor bei geöffneter Tank- oder Ladeklappe und
- Figur 13: das Gehäuse der Verriegelung mit Hallsensor bei geschlossener Tank- oder Ladeklappe.

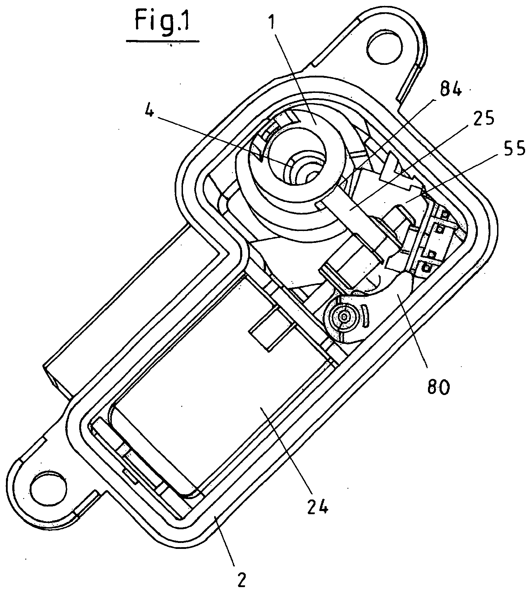

Figur 1 zeigt den Blick auf das Innenleben einer Verriegelung mit einem Riegelbolzen 1 in geöffneter Stellung. Von dem Gehäuse 2 ist nur ein mit einem entsprechenden Bezugszeichen versehener Teil zur besseren Veranschaulichung gezeigt. Der Riegelbolzen 1 weist auf seiner Mantelfläche 7 eine Kulisse 5 auf, welche im Zusammenspiel mit dem Stift 18 als Zwangsführung 8 zwischen Riegelbolzen 1 und Gehäuse 2 dient. Mit dem Bezugszeichen 24 ist der Antrieb in Form eines Motors für die Sperrklinke 25 bezeichnet, über die der Riegelbolzen 1 in der verriegelten Stellung gegen weitere Betätigung gesichert ist.

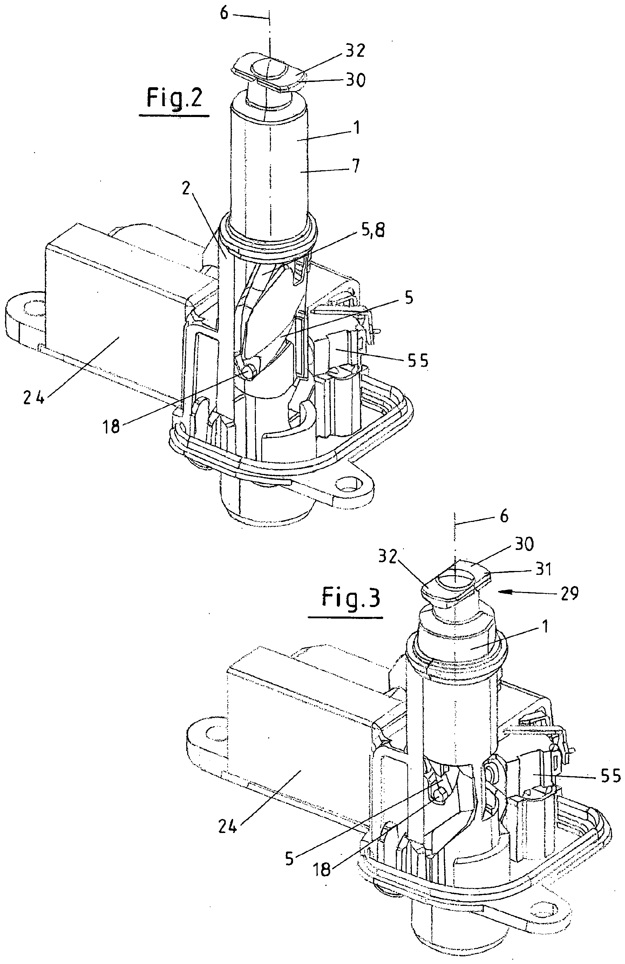

In der Darstellung gemäß Figur 2 wurde der Riegelbolzen 1 in seine Schließstellung gebracht, sprich in Richtung seiner Längsachse 6 nach unten gedrückt. Bewerkstelligt wurde dies über die hier nicht erkennbare Tank- oder Ladeklappe, mit welcher der Riegelbolzen 1 an seinem oberen Ende 29 in Kontakt steht. Verantwortlich hierfür ist der Mechanismus 30 mit den beiden Flügeln 31 und 32, über den der Riegelbolzen 1 mit der Tank- oder Ladeklappe in Eingriff steht. Wird letztere geschlossen, kommt es zu einer Verschiebung des Riegelbolzens 1 in Längsachsenrichtung 6 und um diese Achse 6 zu einer gleichzeitigen Verdrehung in die in Figur 2 dargestellte Position.

Die Figuren 3 bis 6 stellen den erfindungsgemäßen Verriegelungsmechanismus in vier verschiedenen Positionen dar. In Figur 3 ist zunächst das Riegelwerk bei geschlossener Tank- oder Ladeklappe und Riegelbolzen 1 in der eingefahrenen Schließstellung gezeigt. Erkennbar ist die über den hier verdeckten Antrieb steuerbare Sperrklinke 25, die mit ihrem Schwenkarm 77 den Riegelbolzen 1 blockiert; die Verriegelung ist geschlossen. Dabei stützt sich die Sperrklinke 25 auf der Feder 26 ab beziehungsweise die Sperrklinke 25 wird mittels der Kraft der Feder 26 unter Spannung gehalten. Der Stift 18 befindet sich im oberen Bereich der Kulisse 5. Mit 80 ist die Notentriegelung bezeichnet, die auf den Schwenkarm 79 der Sperrklinke 25 einwirken kann. Diese kann manuell oder über den Antrieb 86 betätigt werden. In diesem Fall wirkt der Hebel 87 auf den Schwenkarm 79.

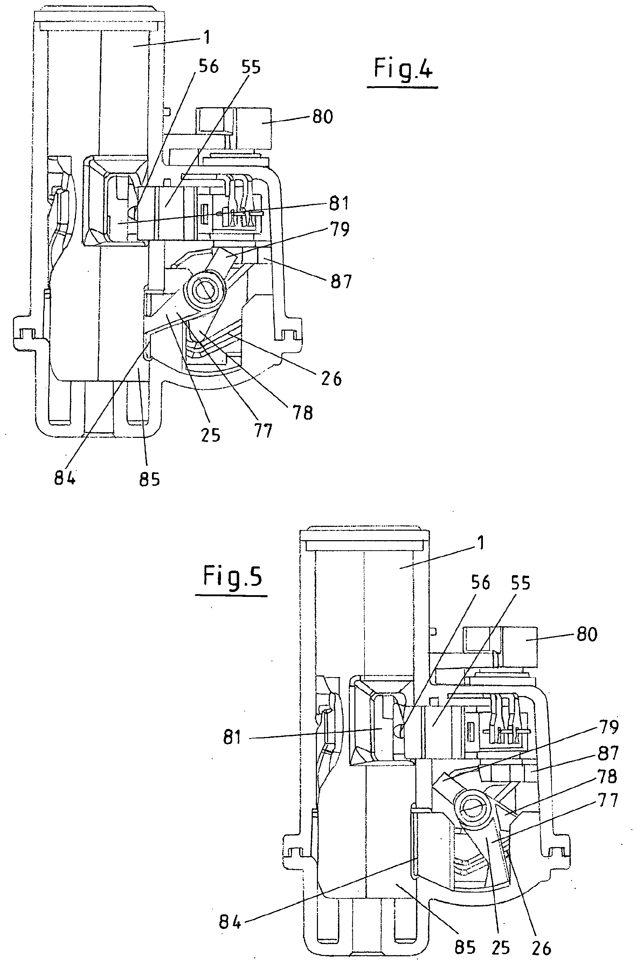

In der Darstellung gemäß Figur 4 ist die Verriegelung nicht geschlossen, der Riegelbolzen 1 befindet sich aber auch in der unteren Schließposition. Allerdings ist die Sperrklinke 25 nicht mit dem Riegelbolzen 1 in Eingriff, sodass diesbezüglich kein Widerstand mehr erfolgt; die Verriegelung ist bei einem Riegelbolzen 1 in der Schließposition nicht verschlossen. Der Stift 18 befindet sich im oberen Bereich der Kulisse 5.

Figur 5 zeigt eine verschlossene Riegelung, allerdings mit einem Riegelbolzen 1 in seiner oberen Öffnungsposition, die Klappe ist also bei verschlossener Verriegelung geöffnet. Zwar befindet sich die Sperrklinke 25 in der Position, wie sie im Grunde Figur 3 entspricht, was allerdings angesichts des geöffneten Riegelbolzens 1 praktisch wirkungslos ist. Der Stift 18 befindet sich am unteren Bereich der Kulisse 5.

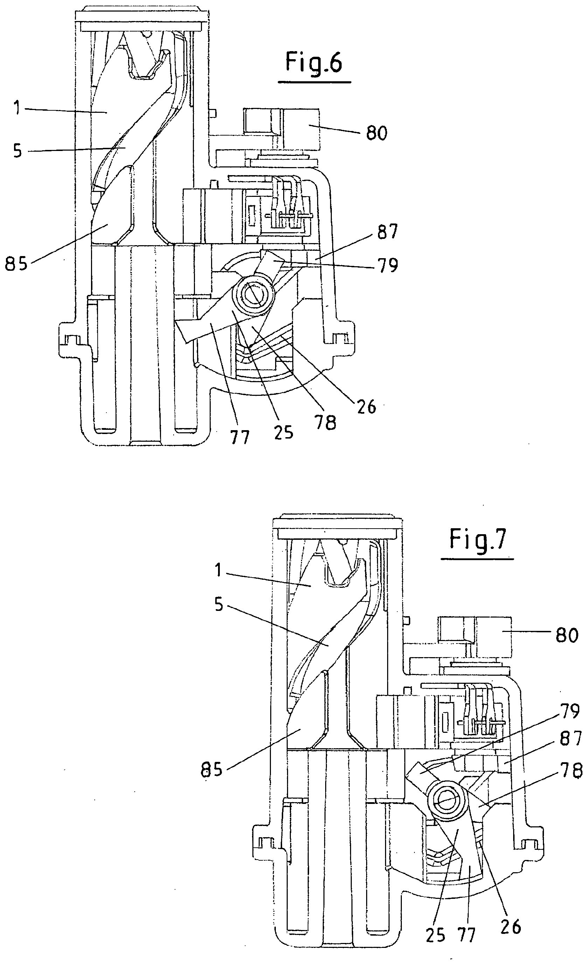

Schließlich zeigt Figur 6 das Riegelwerk bei geöffneter Verriegelung und einem sich in der oberen Öffnungsposition befindlichen Riegelbolzen 1. Erst nach einem Schließen der Klappe, bei der der Riegelbolzen 1 betätigt wird, kann die Sperrklinke 25 in Eingriff mit dem Riegelbolzen 1 gelangen. Während des Schließens führt der Riegelbolzen 1 eine Drehbewegung aus und die Sperrklinke 25 gleitet am Riegelbolzen 1 vorbei, bis die Öffnung 84 am unteren Ende 85 des Riegelbolzens 1 mit der Sperrklinke 25 übereinander liegt und die Sperrklinke 25 in die Öffnung 84 einrastet. In der eingerasteten Stellung verriegelt die Sperrklinke 25 dann den Riegelbolzen 1, sodass die geschlossene Tankklappe verriegelt ist. Der Stift 18 befindet sich am unteren Bereich der Kulisse 5.

Zur Veranschaulichung des Mechanismus bei der Verstellung des Riegelbolzens 1, hier mit dem zur Sicherung dienenden zusätzlichen Kulissenabschnitt 48, dient Figur 7. Mit den Bezugszeichen 36, 39, 64, 65, 66, 63, 40 und 41 sind insgesamt acht Positionen an der Kulisse 5 veranschaulicht, wie sie in Zusammenspiel mit dem hier nicht dargestellten gehäuseseitigen Stift die bolzenseitige Zwangsführung darstellen. Die Position am unteren Ende der Kulisse 5 ist mit 36 bezeichnet. Passiert der Stift nun bei Betätigung des Riegelbolzens 1 aus der ausgefahrenen Öffnungsstellung in die eingefahrene Schließstellung den diagonalen Abschnitt 10, gelangt er in die Position 39 und zwar durch Betätigung gegen die Kraft der Torsions- und der Druckfeder. Nur gegen die Kraft letzterer gelangt der Stift dann in Pfeilrichtung 67 an den mit dem Bezugszeichen 64 bezeichnenden Punkt. Dort beginnt der Kulissenabschnitt 48 zur Sicherung einer Halteposition des Riegelbolzens in seinem geschlossenen Zustand. Die Passage dieses Kulissenabschnitts ist symbolisiert durch die Pfeile 68, 76 und 70. In etwa weist der Kulissenabschnitt 48 eine V-förmige Form auf, wobei die beiden Flanken 70 und 68 des Kulissenabschnitts 48 über einen horizontalen Abschnitt bzw. einen Übergang 76 noch miteinander verbunden sind. Offensichtlich wird in dieser Darstellung, dass es praktisch ausgeschlossen ist, dass der Stift den wannenartigen Kulissenabschnitt 48 verlässt, sofern der Riegelbolzen 1 nicht in entsprechender Weise bewusst betätigt wird. Nicht dargestellt ist, dass der Stift von der Position 64 in die Position 65 im Wesentlichen durch die Unterstützung zum Beispiel einer Gummidichtung an der Tank- oder Ladeklappe gelangt. Dabei gelangt der Riegelbolzen 1 dann in Pfeilrichtung 66 von der Stellung 65 in die Stellung 66 über die Torsionsfeder.

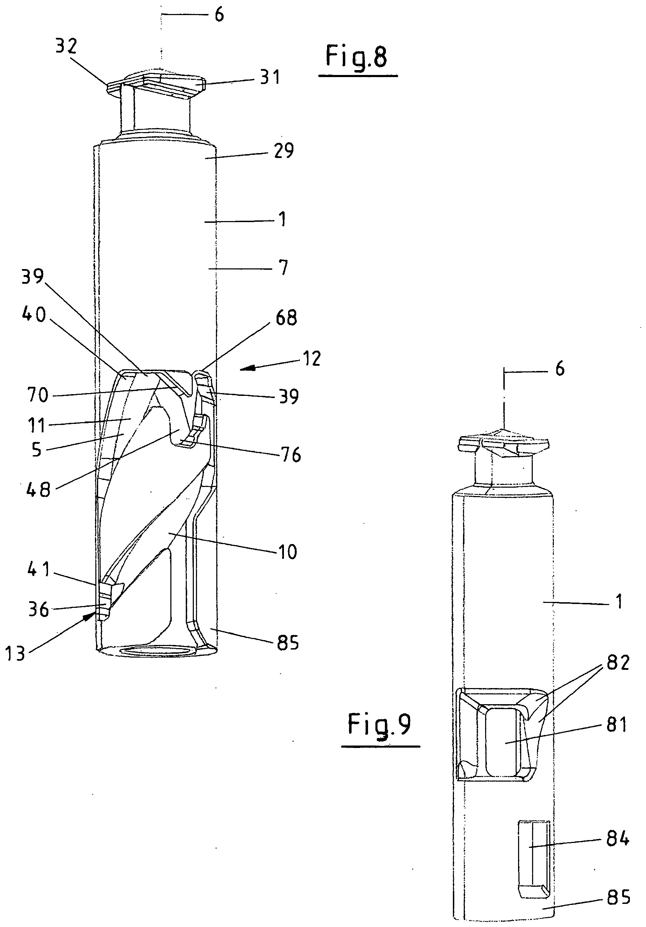

In Figur 8 ist ein Riegelbolzen 1 mit den beiden Öffnungen 81 und 84 dargestellt. Die Öffnung 81 korrespondiert mit dem Schalter des Schaltmittels, das heißt, die Öffnung ist in dem Riegelbolzen 1 exakt so angeordnet, dass sie in der eingefahrenen Position des Riegelbolzens 1 mit dem Schalter korrespondiert. Genauer gesagt kann der Schalter dank der Führungskulisse 82 in der Öffnung 81 in letztere einfahren und die Öffnung 81 auch wieder verlassen. Dies geht einher mit einer entsprechenden Signalgebung, dass der Riegelbolzen 1 sich nun in seiner eingefahrenen, unteren Position befindet. Zweck der unteren Öffnung 84 am unteren Ende 85 des Riegelbolzens 1 ist es, das Einrasten der Sperrklinke zu gewährleisten, das heißt, die Sperrklinke fährt an der Kontur des Riegelbolzens 1 entlang, bis sie aufgrund der Drehung bzw. Längsverschiebung des Riegelbolzens 1 in die Öffnung 84 einrasten kann und eine weitere Bewegung des Riegelbolzens 1 blockiert.

Den Riegel mit Sicherheitsabschnitt selbst zeigt Figur 9. Auch hier sind insgesamt acht Positionen mit dem Bezugszeichen 36, 39, 64, 65, 66, 63, 40 und 41 bezeichnet. Passiert der nicht dargestellte Stift beim Einfahren des Riegelbolzens den diagonalen Abschnitt, gelangt dieser zunächst in die Position 39 und dann über den horizontalen Abschnitt 67 in die Position 64. Es schließt sich der Kulissenabschnitt 48 zur Sicherung an, bestehend aus den beiden V-förmig zueinander angeordneten Flanken 68 und 70, verbunden durch einen Übergang 76, welcher die gesicherte Schließposition darstellt. Es schließen sich an die Flanke 70 des Kulissenabschnitts 48 die Positionen 63 und 40 an, bis der Stift dann über die Diagonale 11 wieder in die Position 41 am unteren Ende 13 der Kulisse 5 gelangt.

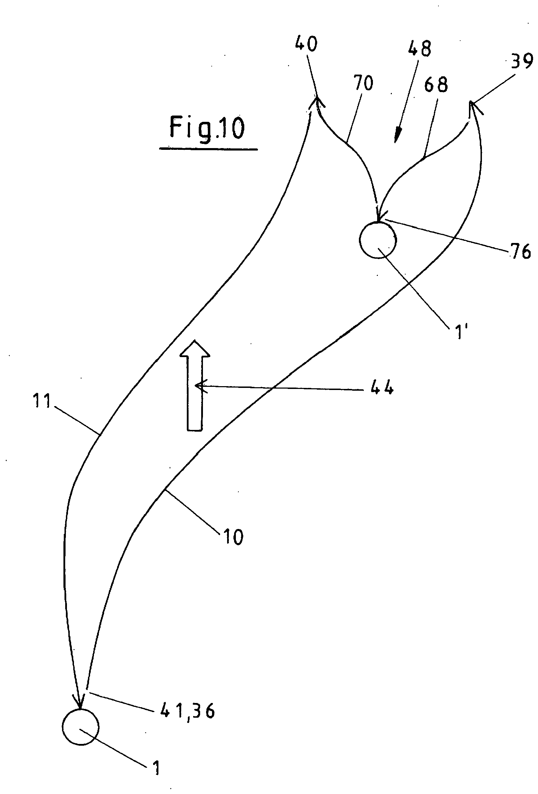

Gegenstand von Figur 10 ist der Blick in das Gehäuse 2 der Verriegelung. Dem Riegelbolzen 1 ist das als Detektionsvorrichtung 54 dienende Schaltmittel 55, ein Mikroschalter, zugeordnet. Die Tank- oder Ladeklappe 1 ist geschlossen, der Verriegelungsbolzen 1 befindet sich in der eingefahrenen, heruntergedrückten Position.

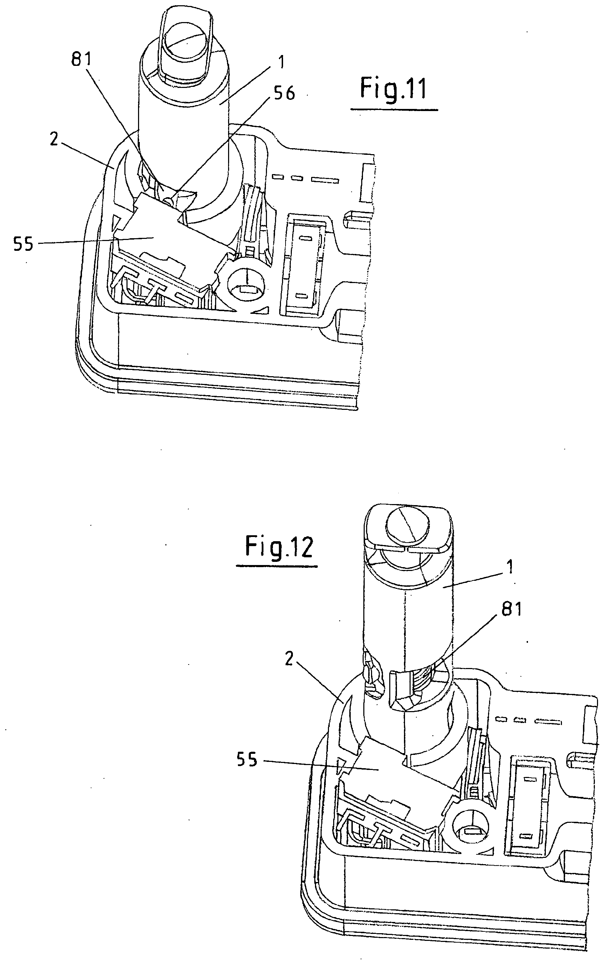

Anders in der Darstellung nach Figur 11, hier ist die Klappe geöffnet, der Verriegelungsbolzen 1 befindet sich in der ausgefahrenen Position. Der Schalter 56 hat seine in der durch das Schaltmittel 55 verdeckten Öffnung in dem Riegelbolzen 1 eingenommen, es erfolgt eine entsprechende Signalgebung, dass sich der Riegelbolzen 1 in seiner ausgefahrenen Öffnungsposition befindet.

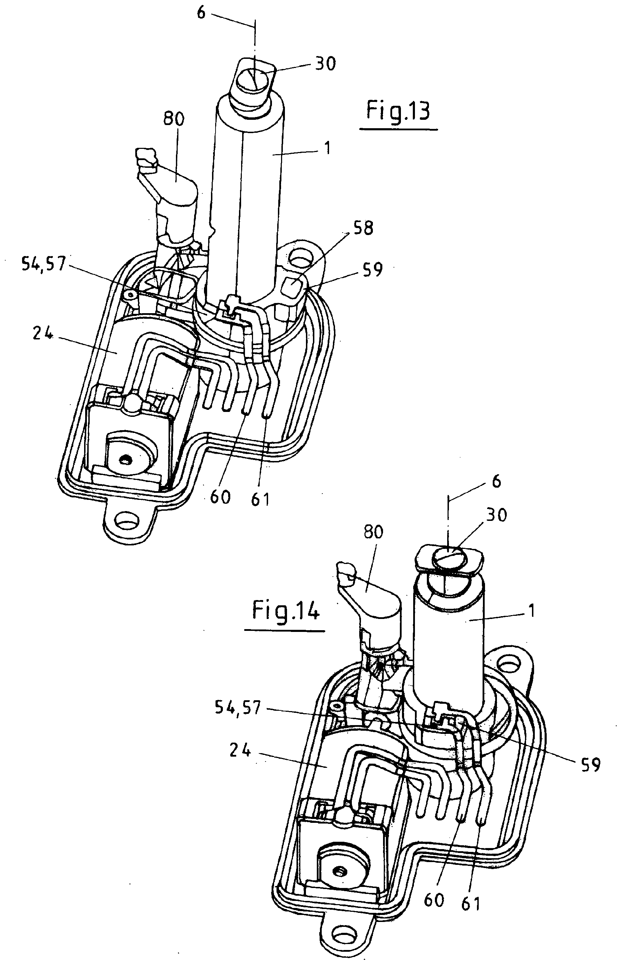

Figur 12 zeigt die alternative Lösung mit einer durch einen Hallsensor 57 und einen Permanentmagneten 58 gebildeten Detektionsvorrichtung 54. In der Darstellung gemäß Figur 14 ist der Riegelbolzen 1 in der ausgefahrenen Position dargestellt; die hier nicht dargestellte Tankklappe ist geöffnet. Zwischen dem Hallsensor 57 und dem in den Riegelbolzen 1 integrierten Permanentmagneten 58 besteht kein Kontakt.

Dies hat sich in der Darstellung gemäß Figur 13 geändert. Die nicht erkennbare Tank- oder Ladeklappe ist geschlossen, das heißt der Riegelbolzen 1 befindet sich in seiner eingefahrenen Position, nachdem er sich dabei um seine Längsachse 6 gedreht hat. Der Permanentmagnet 58 ist durch den Hallsensor 57 weitestgehend verdeckt. Der Hallsensor 57 erfasst also durch die Lokalisierung des Magneten 58 das Verstellen des Riegelbolzens 1 zwischen dessen ausgefahrener und dessen eingefahrener Position, wobei sich solch ein berührungsloses Zusammenspiel zwischen dem Hallsensor 57 und dem Permanentmagneten 58 als Detektionsvorrichtung 54 besonders eignet, wenn eine vergleichsweise klein bauende Detektionsvorrichtung benötigt wird. Mit dem Bezugszeichen 62 ist noch eine mechanische Notentriegelung bezeichnet. Gezeigt sind außerdem Stanzgitter 60 und 61, wie sie zum Beispiel zur Steuerung von hier nicht dargestellten Leuchtmitteln im Bereich der Öffnung der Klappe über die Position des Riegelbolzens 1 dienen. Der Einsatz der Beleuchtungsmittel kann damit auf die Zustände beschränkt werden, in denen die Tankklappe 14 geöffnet und der Riegelbolzen 1 sich in seiner ausgefahrenen Position befindet, wie es Figur 14 zeigt.

## Patentansprüche

1. Verriegelung für eine Tank- oder Ladeklappe in einem Fahrzeug, mit einem durch Öffnen und Schließen der Tank- oder Ladeklappe zwischen einer Öffnungs- und einer Schließposition verstellbaren Riegelbolzen (1), **dadurch gekennzeichnet, dass** der Riegelbolzen (1) in einem Gehäuse (2) der Verriegelung in Richtung seiner Längsachse (6) und um seine Längsachse (6) gegen die Kraft einer Druckfeder (4) zwangsgeführt ist, **dadurch gekennzeichnet, dass** der Riegelbolzen (1) eine Öffnung (81) aufweist, die mit
einem Schalter (56) eines Schaltmittels (55) als Detektionsvorrichtung korrespondieren kann und in die der Schalter (56) des Schaltmittels (55) für ein Erfassen einer Position des Riegelbolzens (1) einfahren oder gleiten kann.

2. Verriegelung nach Anspruch 1, **dadurch gekennzeichnet, dass** in Bezug auf den Riegelbolzen (1) als Zwangsführung (8) auf dessen Mantelfläche (7) eine in sich geschlossene Kulisse (5) dient und/oder dass in Bezug auf das Gehäuse (2) als Zwangsführung (8) ein in der bolzenseitigen Kulisse (5) geführter Stift (18) dient.

3. Verriegelung nach Anspruch 2, **dadurch gekennzeichnet, dass** die Kulisse (5) zwei gegenüberliegende, im Wesentlichen diagonal verlaufende Abschnitte (10, 11) aufweist.

4. Verriegelung nach Anspruch 1, **dadurch gekennzeichnet, dass** die Kulisse (5) in ihren Eckpunkten (71, 72, 73) abgeschrägt ausgebildet ist.

5. Verriegelung nach Anspruch 3, **dadurch gekennzeichnet, dass** zwischen den beiden diagonal verlaufenden Abschnitten (10, 11) ein zur Sicherung einer Halteposition des Riegelbolzens (1) in dessen geschlossenem Zustand dienender Kulissenabschnitt (48) am oberen Ende (12) der Kulisse (5) vorgesehen ist.

6. Verriegelung nach Anspruch 5, **dadurch gekennzeichnet, dass** der Kulissenabschnitt (48) im Wesentlichen V-förmig ausgebildet ist.

7. Verriegelung nach Anspruch 1, **dadurch gekennzeichnet, dass** die Verriegelung mit einer Detektionsvorrichtung (54) für den Öffnungszustand der Tank- oder Ladeklappe ausgerüstet ist.

8. Verriegelung nach Anspruch 7, **dadurch gekennzeichnet, dass** als Detektionsvorrichtung (54) ein Schaltmittel (55) dient, das die Position des Riegelbolzens (1) erfasst, wobei der Schalter (56) des Schaltmittels (55) vorzugsweise an der Kontur des Riegelbolzens (1) anliegt.

9. Verriegelung nach Anspruch 8, **dadurch gekennzeichnet, dass** der Riegelbolzen (1) eine Öffnung (81) mit einer Führungskulisse (82, 83) für den Schalter (56) aufweist, die in der geschlossenen Position des Riegelbolzens (1) benachbart zu dem Schaltmittel (55) positioniert ist.

10. Verriegelung nach Anspruch 7, **dadurch gekennzeichnet, dass** als Detektionsvorrichtung (54) ein Hallsensor (57) in Zusammenwirken mit einem Permanentmagneten (58) dient, wobei der Hallsensor (57) oder der Permanentmagnet (58) dem Riegelbolzen (1) und/oder einem Schwenkhebel (22) zugeordnet ist.

## Claims

1. Lock for a tank flap or a tailgate in a vehicle, having latch bolt (1) that allows moving between an opening position and closing position by opening and closing the tank flap or a tailgate, **characterized in that** the latch bolt (1) is forcibly guided in a housing (2) of the lock in its longitudinal axis (6) and about its longitudinal axial (6) against the force of a pressure spring (4), **characterized in that** the latch bolt (1) comprises an aperture (81), which can correspond with a switch (56) of a switching means (55) as detection device and in which the switch (56) of the switching means (55) can drive or slide for detecting a position of the latch bolt (1).

2. Lock according to claim 1, **characterized in that** in respect to the latch bolt (1), an in itself closed block guide (5) serves as forcibly guide (8) on its surface shell (7) and/or that in respect to the housing (2), a pin (18) serves as forcibly guide (8), which is guided in the block guide (5) that is on the latch bolt side.

3. Lock according to claim 2, **characterized in that** the block guide (5) has two opposite, substantially diagonal running sections (10, 11).

4. Lock according to claim 1, **characterized in that** the block guide (5) is formed bevelled in its corner points (71, 72, 73).

5. Lock according to claim 3, **characterized in that** between the both diagonal running sections (10, 11), there is provided a block guide section (48) at the upper end (12) of the block guide (5) serving to securing a holding position of the latch bolt (1) in its closed condition.

6. Lock according to claim 5, **characterized in that** the block guide section (48) is formed substantially V-shaped.

7. Lock according to claim 1, **characterized in that** the lock is equipped with a detection device (54) for the opening condition of the tank flap or the tailgate.

8. Lock according to claim 7, **characterized in that** a switching means (55) serves as detection device (54), which detects the position of the latch bolt (1), wherein the switch (56) of the switching means (55) preferably lies against the contour of the latch bolt (1).

9. Lock according to claim 8, **characterized in that** the latch bolt (1) comprises an aperture (81) with a guiding block guide (82, 83) for the switch (56), which is positioned adjacent to the switching means (44) in the closed position.

10. Lock according to claim 7, **characterized in that** a hall sensor (57) in cooperation with a permanent magnet (58) serves as detection device (54), wherein the hall sensor (57) or the permanent magnet (58) are assigned to the latch bolt (1) or a swivel lever (22).

## Revendications

1. Dispositif de verrouillage d'une trappe de réservoir ou de chargement d'un véhicule, comprenant un verrou de blocage (1), qui peut être déplacé entre une position d'ouverture et une position de fermeture par moyen de l'ouverture et de la fermeture de la trappe de réservoir ou de chargement, **caractérisé en ce que** le verrou de blocage (1) est guidé de force dans un boîtier (2) du dispositif de verrouillage dans la direction de son axe longitudinal (6) et autour de son axe longitudinal (6) contre la force d'un ressort de compression (4), **caractérisé en ce que** le verrou de blocage (1) comprend une ouverture (81), qui peut correspondre avec un commutateur (56) d'un moyen de commutation (55) en tant que dispositif de détection et dans laquelle le commutateur (56) du moyen de commutation (55) peut s'insérer ou glisser pour détecter une position du verrou de blocage (1).

2. Dispositif de verrouillage selon la revendication 1, **caractérisé en ce que** quant au verrou de blocage (1) une coulisse fermée sur elle-même (5) et disposée sur la surface enveloppante (7) de celui-ci sert de guidage de force (8) et/ou quant au boîtier (2) une cheville (18) guidée dans la coulisse (5) sur le côté du boulon sert de guidage de force (8).

3. Dispositif de verrouillage selon la revendication 2, **caractérisé en ce que** la coulisse (5) comprend deux sections (10, 11), qui se font face et s'étendent essentiellement de manière diagonale.

4. Dispositif de verrouillage selon la revendication 1, **caractérisé en ce que** la coulisse (5) est chanfreinée à ses points de coin (71, 72, 73).

5. Dispositif de verrouillage selon la revendication 3, **caractérisé en ce qu'**une section de coulisse (48), qui est disposée à l'extrémité supérieure (12) de la coulisse (5) et qui sert à assurer une position de retenue du verrou de blocage (1) dans l'état fermé de celui-ci, est prévue entre les deux sections (10, 11), qui s'étendent de manière diagonale.

6. Dispositif de verrouillage selon la revendication 5, **caractérisé en ce que** la section de coulisse (48) est essentiellement conçue en forme de V.

7. Dispositif de verrouillage selon la revendication 1, **caractérisé en ce que** le dispositif de verrouillage est muni d'un dispositif de détection (54) de l'état ouvert de la trappe de réservoir ou de chargement.

8. Dispositif de verrouillage selon la revendication 7, **caractérisé en ce qu'**un moyen de commutation (55) sert de dispositif de détection (54), qui détecte la position du verrou de blocage (1), le commutateur (56) du moyen de commutation (55) s'appuyant de préférence contre le contour du verrou de blocage (1).

9. Dispositif de verrouillage selon la revendication 8, **caractérisé en ce que** le verrou de blocage (1) comprend une ouverture (81) avec une coulisse de guidage (82, 83) pour le commutateur (56), laquelle est positionnée adjacente au moyen de commutation (55) dans la position fermée du verrou de blocage (1).

10. Dispositif de verrouillage selon la revendication 7, **caractérisé en ce qu'**un capteur Hall (57) en coopération avec un aimant permanent (58) sert de dispositif de détection (54), le capteur Hall (57) ou l'aimant permanent (58) étant associé au verrou de blocage (1) et/ou à un levier pivotant (22).
